# EUROPÄISCHE PATENTSCHRIFT

(11) **EP 1 312 062 B1**
(45) Veröffentlichungstag und Bekanntmachung des Hinweises auf die Patenterteilung: **14.04.2004**
(21) Anmeldenummer: 01969204.5
(22) Anmeldetag: 31.07.2001
(51) Int. Cl.: G08G 1/0962, G08G 1/0967, G08G 1/09

(54) **VERFAHREN ZUM BETRIEB EINES NAVIGATIONSGERÄTS UND ANORDNUNG ZUR DURCHFÜHRUNG DES VERFAHRENS**
METHOD FOR OPERATING A NAVIGATION DEVICE AND SYSTEM FOR CARRYING OUT SAID METHOD
PROCEDE POUR FAIRE FONCTIONNER UN APPAREIL DE NAVIGATION ET DISPOSITIF POUR LA MISE EN OEUVRE DUDIT PROCEDE

(30) Priorität: 25.08.2000 DE 10041800
(43) Veröffentlichungstag der Anmeldung: 21.05.2003
(73) Patentinhaber: SIEMENS AKTIENGESELLSCHAFT, 80333 München (DE)
(72) Erfinder: KLEIN, Bernhard, 93186 Pettendorf (DE); ZEHNER, Steffen, 93049 Regensburg (DE)
(86) Internationale Anmeldenummer: PCT/DE2001/002917
(87) Internationale Veröffentlichungsnummer: WO 2002/017268

(56) Entgegenhaltungen:
- EP-A- 0 849 563
- EP-A- 1 030 280
- DE-A- 19 748 077
- US-A- 5 987 382
- PATENT ABSTRACTS OF JAPAN vol. 1995, no. 08, 29. September 1995 (1995-09-29) & JP 07 134795 A (FUJITSU TEN LTD), 23. Mai 1995 (1995-05-23)
- PATENT ABSTRACTS OF JAPAN vol. 016, no. 583 (P-1462), 22. Dezember 1992 (1992-12-22) & JP 04 232811 A (ALPINE ELECTRON INC), 21. August 1992 (1992-08-21)
- PATENT ABSTRACTS OF JAPAN vol. 1999, no. 11, 30. September 1999 (1999-09-30) & JP 11 153444 A (NEC HOME ELECTRON LTD), 8. Juni 1999 (1999-06-08)

## Beschreibung

Die vorliegende Erfindung betrifft ein Verfahren zum Betrieb eines Navigationsgeräts gemäß dem Oberbegriff des Anspruchs 1, bzw. eine Anordnung zur Durchführung des Verfahrens gemäß dem Oberbegriff des Anspruchs 7.

Ein derartiges Verfahren zum Betrieb eines Navigationsgeräts ist aus der Offenlegungsschrift DE 43 01 875 A1 bekannt. Dort wird als Stand der Technik geschildert, dass Verkehrsstaus und Unfälle auf der Grundlage von empfangenen Verkehrsinformationen angezeigt werden. Eine empfehlenswerte Strecke zum Ziel wird unter Berücksichtigung der Verkehrsinformation ausgegeben. Um Kenntnisse des Fahrers zu berücksichtigen, soll demgegenüber nach der Lehre dieser Offenlegungsschrift der Fahrer Stellen eingeben, die er zu umfahren wünscht. Eine empfehlenswerte Strecke wird unter Berücksichtigung der zu vermeidenden Stellen berechnet.

Navigationsgeräte, insbesondere im Kraftfahrzeugbereich, dienen der Routenführung sowie deren Anzeige auf einem Bildschirm vorzugsweise mittels einer digital dargestellten Karte. Moderne Systeme verfügen über eine sogenannte dynamische Zielführung. Dabei ist ein derartiges Navigationssystem zum Beispiel mit einem RDS-Radio, einem Mobiltelefon und/ oder ähnlichen Mitteln kombiniert. Eine derartige Kombination dient dazu, aktuelle Verkehrsinformationen zur Bestimmung der optimalen Fahrtroute zu verwenden. Ein derartiges System ist zum Beispiel in der Zeitschrift mot/Auto Guide 4/1999 auf Seite 16 ff beschrieben. Zur Bedienung gibt ein Fahrer üblicherweise Zielkoordinaten in Form einer Adresse über eine Eingabeeinheit ein. Als Startkoordinate wird die derzeitige Position des Fahrzeugs verwendet. Das System kann nun über einen Service zusätzlich mit Verkehrsinformationen versorgt werden. Das in Deutschland zugängliche TMC-Verkehrsfunkmeldungssystem überträgt hierzu Verkehrsinformationsdaten. Des weiteren gibt es Serviceprovider, welche Telematik-Daten, zum Beispiel über ein Mobilfunknetz, anbieten. Das beschriebene System bindet die empfangenen Informationen vollautomatisch zur Berechnung einer Fahrtroute ein. Im Gegensatz zu bisherigen statischen Navigationssystemen besitzen diese dynamischen Systeme daher die Möglichkeit über externe Quellen aktuelle Straßeninformationen, wie zum Beispiel Staus, Nebel oder andere Gegebenheiten, mit in die Routenplanung aufzunehmen und zu berücksichtigen.

Ein derartiges System ist beispielsweise aus der DE 19748077 A1 bekannt.

Nachteil dieser Systeme ist, dass in bisherigen Systemen der Benutzer keinerlei Eingriffsmöglichkeit in die Behandlung dieser zusätzlichen Informationen hat.

Aufgabe der vorliegende Erfindung ist es daher, ein Verfahren und eine Anordnung anzugeben, welche die oben genannten Nachteile nicht aufweisen.

Diese Aufgabe wird durch den Kennzeichnenden Teil der unabhängigen Ansprüche gelöst. Vorteil der vorliegenden Erfindung ist es, dass neben der vollautomatischen Umfahrung von Staus, dem Fahrer noch eine weitere Option angeboten wird. Hierbei kann dieser manuell selektiv auswählen, welcher Stau auf der Route relevant ist und umfahren werden soll. Des weiteren können auch bestimmte Teilstrecken der Route manuell gesperrt werden, beziehungsweise bestimmte Gebiete selektiert werden, welche nicht für die Umgehung verwendet werden sollen.

Die Erfindung wird nachfolgend anhand der Figuren näher erläutert.

Es zeigen:
- Figur 1: ein Blockschaltbild einer erfindungsgemäßen Anordnung eines Navigationsgeräts,
- Figuren 2A, 2B: Displaydarstellungen in einem ersten Anwendungsfall,
- Figur 3: eine Displaydarstellung in einem weiteren Anwendungsfall,
- Figur 4: ein Flussdiagramm des Hauptteils des erfindungsgemäßen Verfahrens,
- Figur 5: ein Flussdiagramm einer ersten Option des erfindungsmäßen Verfahrens,
- Figur 6: ein Flussdiagramm einer zweiten Option des erfindungsmäßen Verfahrens, und
- Figur 7: ein Flussdiagramm einer dritten Option des erfindungsmäßen Verfahrens.

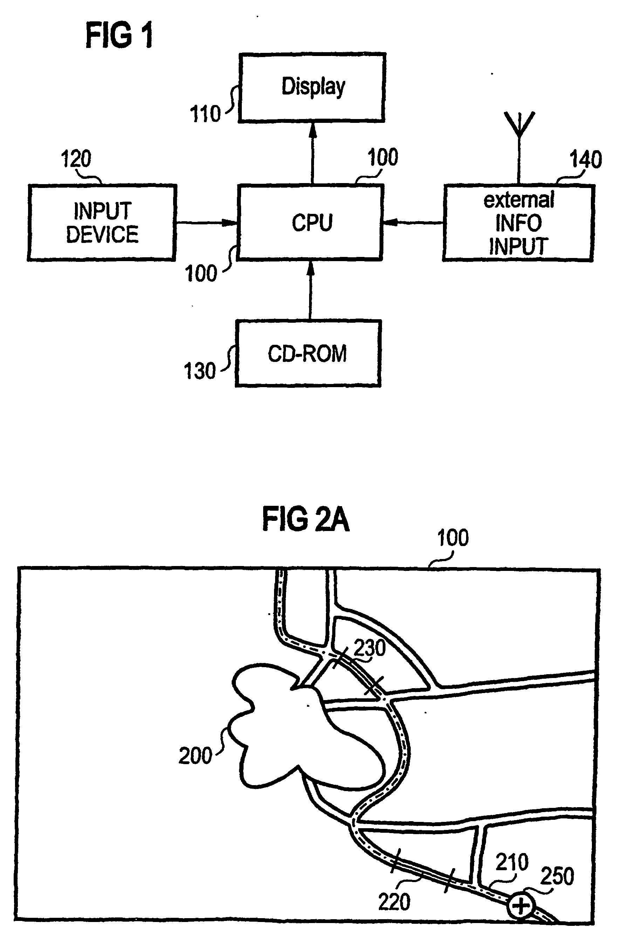

Figur 1 zeigt schematisch den Aufbau eines Navigationsgeräts gemäß der vorliegenden Erfindung. Eine zentrale Recheneinheit 100 weist üblicherweise einen Mikrokontroller oder Mikroprozessor sowie eine Speichereinheit auf. Des weiteren sind notwendige Peripherieeinheiten mit entsprechenden Schnittstellen vorgesehen, welche eine Verbindung mit externen Einheiten ermöglichen. So ist eine Anzeigeeinheit 110 und eine Eingabevorrichtung 120 vorgesehen. Die Eingabeeinrichtung 120 kann zum Beispiel ein Joystick, ein Dreh-/Druckgeber, eine Tastatur oder eine Maus sein. Des weiteren kann die Eingabevorrichtung 120 auch eine Gesteninterpretationsvorrichtung zur Auswertung von Handzeichen, eine Spracheingabevorrichtung, eine Sensoreinrichtung auf dem Display zur direkten Eingabe über den Bildschirm oder dergleichen sein. Mit den Bezugszeichen 130 ist ein externer Festwertspeicher zum Beispiel in Form einer CDROM vorgesehen. Schließlich ist eine Verbindung mit einer externen Informationsquelle 140 vorgesehen. Diese externe Informationsquelle 140 kann zum Beispiel ein RDS-Radio mit der Fähigkeit, TMC Nachrichten zu empfangen, sein. Des weiteren kann diese Einheit zum Beispiel mit einem Mobiltelefon zum Abruf von aktuellen Straßeninformationen oder eine weitere Einrichtung zum Empfang von externen Straßenverkehrsinformationen sein.

Die Funktionsweise des erfindungsgemäßen Systems wird nachfolgend beschrieben. Üblicherweise wird bei Inbetriebnahme des Systems, nachdem der Fahrer eine Route geplant hat, in diesem eine Option angeboten, eine Zielkoordinate, z.B. in Form einer Zieladresse (Strasse, Hausnummer, Postleitzahl...) einzugeben. Dies kann entweder über eine Tastatur, Spracheingabe, ein eingabeempfindliches Display oder dergleichen erfolgen. Als Startadresse wird üblicherweise die aktuelle Fahrzeugposition verwendet. Das System bietet dann eine Reiseroute an, welche zum Beispiel auf einem Bildschirm 110 mittels einer Liste der ausgewählten Strassen oder mittels Kartendarstellung dargestellt wird. Bei einer grafischen Darstellung wird die gewählte Route optisch z.B. mittels geeigneter Farbwahl hervorgehoben und,so die geplante Route dargestellt.

Das System kann über externe Quellen 140 mit zusätzlicher Information versorgt werden. Zum Beispiel kann in Deutschland das kostenlose TMC- Verkehrsfunkinformationssystem in das bestehende System eingebunden werden. Dieses System bietet über eine jeweilige Radiostation digitale Verkehrsinformationen an, welche durch das Navigationsgerät weiter verarbeitet werden können. Dieses System kann zum Beispiel Stauinformationen oder andere wichtige Verkehrsinformationen in Form von standardisierten Koordinateninformationen übertragen. Das System zeigt dann auf einer Landkarte optisch hervorgehoben diese aktuellen Straßeninformationen auf der Route an.

Figur 2A zeigt schematisch eine Kartendarstellung gemäß der vorliegenden Erfindung. Auf einem Display 100 ist zum Beispiel ein Ausschnitt einer Karte mit einem Teil einer ermittelten Fahrtroute dargestellt. Mit den Bezugszeichen 200 ist zum Beispiel eine Stadt bezeichnet. Die aktuelle Fahrzeugposition ist mit 250 in Form eines Markers dargestellt. Eine Straße, auf der die geplante Reiseroute verläuft, ist mit 210 bezeichnet. Die gestrichelte Linie zeigt die durch das System berechnete optimale Reiseroute an. Mit Bezugszeichen 220 beziehungsweise 230 sind zwei Teilstücke der zu befahrenden Strecke graphisch hervorgehoben dargestellt. Diese Teilstücke wurden durch die externe Informationseinheit 140 als zum Beispiel mit einem Stau behaftet identifiziert. Im dargestellten Beispiel zeigt das System diese Streckenteilstücke als durchgezogene Linie an.

Es werden dem Fahrer nach Anzeige der Fahrtroute mehrere Optionen angeboten. Durch Druck auf eine Eingabetaste kann zum Beispiel ein Optionsmenü geöffnet werden. In diesem können zum Beispiel folgende Funktionen gewählt werden:
- Maßstab ändern
- Nächster Stau
- Vorheriger Stau
- Stau wählen
- Stauanfang wählen
- Stau abwählen
- Umfahrungszone
- Abbruch
- Ok

### Option: Maßstab ändern

Zum schnellen Bewegen auf der Route kann durch diese Option der Kartenmaßstab geändert werden.

### Option: Nächster Stau

Damit der Fahrer schnell die vorhandenen Staus anwählen kann, kann er durch Wählen dieser Option zum nächsten Stau in Fahrtrichtung springen. Dabei wird als erstes der dem Fahrzeug nächste Stau angewählt. Dieser kann dann bei Auswahl zum Beispiel durch eine unterschiedliche Farbe hervorgehoben werden. Zusätzlich kann der Marker auf diesen Bereich gesetzt werden, um anzuzeigen, dass dieser Bereich ausgewählt wurde.

### Option: Vorheriger Stau

Damit der Fahrer schnell die vorhandenen Staus anwählen kann, kann er durch Wählen dieser Option zum nächsten Stau entgegen der Fahrtrichtung springen. Der Marker wird dann entsprechend versetzt.

### Option: Stau wählen

Der angewählte Stau kann durch diese Option in die Sperrliste aufgenommen werden. Ist ein Stau in die Sperrliste aufgenommen worden, so kann entsprechend einer Programmierung des Systems dieser Stau als ausgewählter Stau und damit als zu berücksichtigender oder als nicht zu berücksichtigender Stau ausgewählt werden. Im vorliegenden Beispiel wird davon ausgegangen, dass ein Aufnehmen eines Staus in die Sperrliste dazu führt, dass dieser Stau in der nachfolgenden Routenberechnung berücksichtigt wird.

### Option: Stauanfang wählen

Mittels der Eingabevorrichtung 120 kann in dieser Option die Markerposition zu einem definierbaren Stauanfangspunkt entlang der Fahrtroute verschoben werden. Zur Definition der Staulänge wird der Marker mittels der Eingabevorrichtung 120 auf den jeweiligen definierbaren Endpunkt des Staus verschoben. Der Marker wird dabei von seiner aktuellen Position entlang der ermittelten Reiseroute verschoben. Durch Drücken eines Eingabeknopfs in der Eingabevorrichtung 120 kann man zum Menü zurückgelangen. Die so manuell generierte Stauanzeige kann automatisch in die Sperrliste aufgenommen werden oder über die Option Stau wählen in diese Liste aufgenommen werden. Mittels geeigneter Farbwahl kann unterschieden werden, welcher Stau in die Sperrliste aufgenommen wurde und welcher nicht.

### Option: Stau abwählen

Durch Verschieben des Markers mittels der Eingabevorrichtung 120 auf einen bereits markierten Stau kann dieser ausgewählt werden und mittels der Option Stau abwählen kann er aus der Sperrliste gestrichen werden.

### Option: Umfahrungszone

Die momentan verfügbaren Staumeldungen beschränken sich in der Regel auf die durch den jeweiligen Provider angebotenen Informationen. Zum Beispiel wird üblicherweise durch die RDS-TMC-Information das in Deutschland vorhandene Autobahnnetzwerk abgedeckt. Der Fahrer kennt jedoch oftmals seine nähere Umgebung und möchte bestimmte Strecken von der Routenberechnung ausschließen. Zum einen kann es sein , dass bestimmte Strecken mit ungünstiger Ampelbeschaltung versehen sind, wie oben beschrieben staubelastet sind oder mit anderen Nachteilen behaftet sind. Um zu verhindern, das die Routenberechnung eine Straße verwendet, die mit einem derart bekannten Nachteil behaftet ist, kann mit dieser Option ein Umfahrungskorridor definiert werden. Nachdem der Fahrer diese Option gewählt hat, wird auf der Karte ein umschreibendes Rechteck um den gewählten Stau herum dargestellt. Mit Hilfe des Drehknopfes kann die Größe dieses Rechtecks, also die Sperrzone vergrößert oder verkleinert werden. Durch Drücken des Drehknopfes gelangt man zurück in das Menü, in dem man durch Selektion von "Stau wählen" den durch das Rechteck definierten Straßenbereich als Staugebiet in die Stauliste aufnehmen kann. Alternativ kann anstelle eines Rechtecks selbstverständlich auch jede andere geometrische sinnvolle Form verwendet werden. Es kann des weiteren auch von Vorteil sein, ein Gebiet frei zu definieren. Dies kann z.B. mittels eines drucksensitiven Bildschirms durch einen Eingabestift geschehen.

### Option: Abbruch

Mit dieser Option wird die manuelle Stauauswahl verlassen und alle Veränderungen der Stauliste werden gelöscht.

### Option: OK

Mit dieser Option bestätigt man die Stauauswahl. Daraufhin wird eine neue Routenberechnung durchgeführt, die eine neue optimale Route basierend auf den selektierten Staustrecken in der Sperrliste berechnet. Diese neue Route wird dann auf dem Display wie zuvor beschrieben angezeigt.

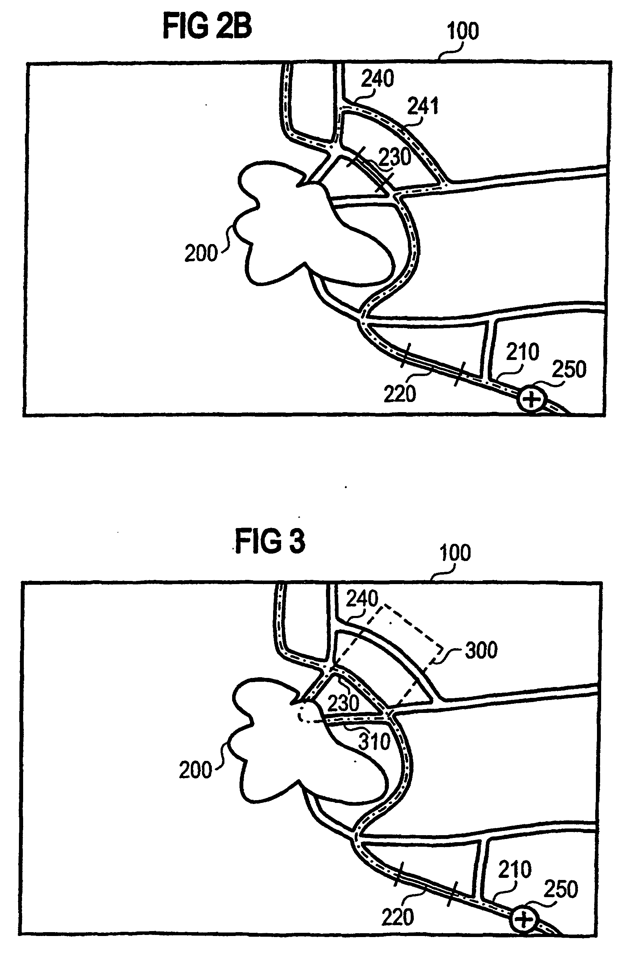

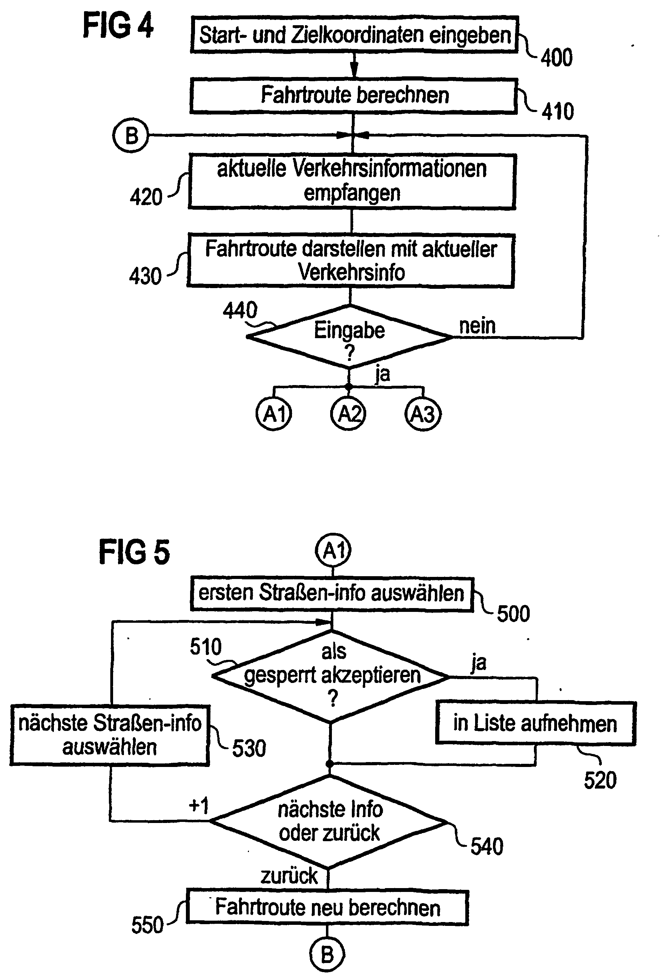

Die verschiedenen erfindungsgemäßen Funktionen des Navigationsgeräts werden nun anhand der Figuren 2A, 2B und 3 sowie der in den Figuren 4 bis 7 dargestellten Ablaufdiagramm näher erläutert.

Die nach Eingabe der Zielkoordinaten berechnete Fahrtroute ist in Figur 2A mit 210 bezeichnet und gestrichelt dargestellt. Auf einem Farbdisplay kann die Route z.B. durch grüne Farbgebung hervorgehoben werden, wenn das Straßennetz üblicherweise grau dargestellt ist. Die dargestellte Route enthält hier zwei Teilstücke 220, 230, welche durch das externe Verkehrsinformationssystem gekennzeichnet wurden. Diese Teilstücke 220, 230 können z.B. blau dargestellt werden. Mittels der zuvor erklärten Optionen wird nun diese Stauliste durch den Fahrer abgefragt. Bei dem vorliegendem Beispiel wird angenommen, dass der Fahrer den ersten Stau 220 akzeptiert und nicht umfahren will und den zweiten Stau 230 umfahren will. Der Fahrer wird daher durch Wählen der Option nächster Stau den Stau 220 überspringen und zum Stau 230 springen. Dieser Stau wird mittels der Option "Stau wählen" in die Sperrliste aufgenommen. Nach Wählen der Option OK wird eine neue Fahrtroute ermittelt, welche in Figur 2B durch die strichpunktierte Linie 241 in Kombination mit der bisherigen gestrichelt gekennzeichneten Fahrtroute dargestellt wird. Als Umgehungsstrecke wählt in diesem Beispiel das Navigationsgerät die Straße 240 aus, um den Stau 230 zu umfahren.

Figur 3 zeigt die Funktion zur Definition einer Umfahrungszone. Es wird angenommen, dass der Fahrer weiß, dass die Nebenstrecke 240, zum Beispiel eine Landstraße, üblicherweise ebenfalls einen Stau aufweist, sobald die Autobahnstrecke mit dem Stau 230 belastet ist. In diesem Fall wählt der Fahrer die Option Umfahrungszone. Dadurch wird ein Rechteck auf dem Bildschirm angezeigt, welches durch die Eingabevorrichtung 120 vergrößert, verkleinert und/oder verschoben werden kann. Im vorliegenden Beispiel wird dieses Rechteck 300 so definiert, dass es die Umfahrungsstraße 240 umfasst. Durch Bestätigung wird dieses Teilstück nun in die Sperrliste aufgenommen. Zur Berechnung eines neuen Umfahrungswegs wird nun dieses Teilstück 240 nicht mehr in Erwägung gezogen. Dadurch wird als neue Umfahrungsstrecke nun zum Beispiel die neue Teilstrecke 310 ausgewählt.

Die Figuren 4 bis 7 zeigen ein Flussdiagramm des erfindungsgemäßen Verfahrens zum Betrieb eines Navigationsgeräts. Zu Beginn werden in Schritt 400 durch den Fahrer die Zielkoordinaten eingegeben. Überlicherweise erfolgt dies durch Angabe einer Adresse mit Straßennamen, Hausnummer, Postleitzahl und Stadtnamen, etc. Selbstverständlich können auch andere Eingabeformate gewählt werden, wie z.B. Koordinaten oder Codes, die auf einer Landkarte dargestellt sind. Als Startadresse wird die aktuelle Fahrzeugposition verwendet. Soll eine Route unabhängig von der aktuellen Fahrzeugposition errechnet werden, so kann alternativ auch eine Startadresse in der oben beschriebenen Form eingegeben werden. Nachfolgend wird im Schritt 410 die entsprechende Fahrtroute durch das Navigationssystem berechnet. Im Schritt 420 werden nun aktuelle Verkehrsinformationen empfangen. Im nachfolgenden Schritt 430 wird die Fahrtroute, die zuvor im Schritt 410 berechnet wurde dargestellt und mit der aktuellen Verkehrsinformation versehen. Dies kann zum Beispiel dadurch erfolgen, dass die gemeldeten Staugebiete wie zuvor beschrieben farblich hervorgehoben dargestellt werden und/oder mit entsprechender Schriftkennzeichnung markiert werden. Im Schritt 440 wird nun überprüft, ob eine Eingabe durch den Benutzer vorgenommen wurden, wodurch eine Option gewählt wurde. Falls dies nicht der Fall ist, wird zum Schritt 420 zurückgesprungen.

Erfolgt eine Eingabe, so wird eine der zuvor beschriebenen Optionen ausgeführt. Nachfolgend sind anhand der Figuren 5,6 und 7 drei dieser Optionen als Teilprogramme A1, A2, A3 näher beschrieben.

In Figur 5 ist das Teilprogramm A1 näher dargestellt. In diesem Teilprogramm werden die farblich gekennzeichneten Zusatzinformationen, wie zum Beispiel Stau, Nebel oder andere Gegebenheiten, ausgewählt. Im Schritt 500 wird die erste und damit dem Fahrzeug nächste Straßeninformation ausgewählt und zum Beispiel durch unterschiedliche Farbdarstellung am Bildschirm markiert. Im Schritt 510 wird überprüft, ob diese Straßeninformation in die Sperrliste aufgenommen werden soll. Falls Ja, wird im Schritt 520 diese in die Sperrliste aufgenommen. Falls Nein, wird im nächsten Schritt 540 überprüft, ob zur nächsten Straßeninformation gesprungen werden soll, oder. ob ins Hauptmenü zurückgekehrt werden soll. Falls zur nächsten Straßeninformation gesprungen werden soll, wird im Schritt 530 die nächste Straßeninformation ausgewählt und zum Schritt 510 gesprungen. Falls zurück zum Hauptmenü gesprungen werden soll, so wird eine neue Fahrtroute im Schritt 550 berechnet und zum Anschlusspunkt B in Figur 4 gesprungen.

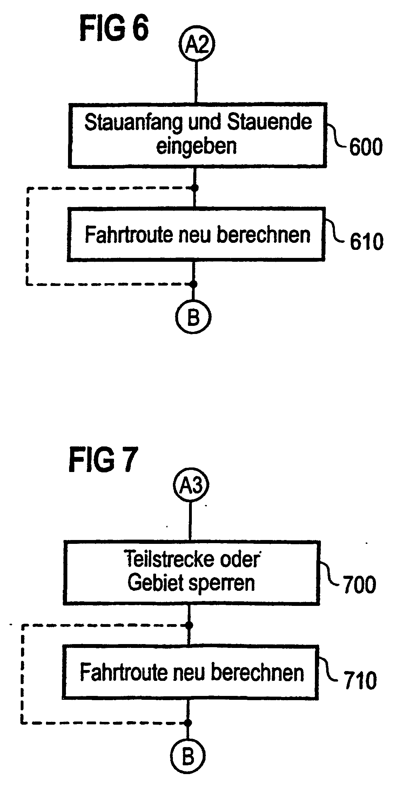

Figuren 6 und 7 zeigen die jeweiligen Teilprogramme zur manuellen Eingabe eines Staus beziehungsweise zur manuellen Eingabe eines zu sperrenden Gebiets. In Figur 6 wird im Schritt 600 abweichend von der in den unabhängigen Ansprüchen definierten Erfindung ein Stauanfang und ein Stauende durch den Fahrer eingegeben. Je nach Ausführung des Programms kann Schritt 610 übersprungen werden oder dieser manuell definierte Stau automatisch in die Sperrliste aufgenommen werden, wodurch im Schritt 610 dann die Fahrtroute neu berechnet wird und zum Punkt B in Figur 4 zurückgesprungen wird.

Zur Definition einer Umfahrungszone wird im Schritt 700 eine Teilstrecke oder ein Gebiet gesperrt. Hierzu gibt der Fahrer mittels der Eingabevorrichtung 120 die Größe eines Rechtecks ein. Dieses Rechteck wird auf dem Bildschirm dargestellt und kann zum Beispiel auf dem Bildschirm verschoben, vergrößert oder verkleinert werden. Entsprechend dem Ablaufdiagramm in Figur 6 kann diese definierte Teilstrecke oder dieses definierte Gebiet automatisch in die Sperrliste übernommen werden. In diesem Fall wird im Schritt 710 eine neue Fahrtroute berechnet und zum Punkt B in Figur 4 zurückgesprungen.

Wie zuvor beschrieben kann die Optionsauswahl über eine Tastatur oder einen Dreh-/Druckgeber erfolgen. Alternativ kann eine Spracherkennung oder eine Gestenerkennungsvorrichtung die jeweiligen Befehle dekodieren und interpretieren. Die zuvor beschriebene Vorrichtung weist vorzugsweise eine Anzeige mit graphischer Ausgabe, z.B. in Form einer Landkarte aus. Alternativ kann auch eine reine Textdarstellung erfolgen. Hierzu zeigt das Display eine Liste von zu befahrenden Strassen an. Staus können in einer getrennt gespeicherten Liste bearbeitet werden. Die Eingabe einer Umfahrungszone kann dann z.B. mittels Eingabe von zu sperrenden Strassen oder durch Eingabe von Koordinaten erfolgen.

## Patentansprüche

1. Verfahren zum Betrieb eines Navigationsgeräts mit einer zentralen Recheneinheit und einem Speichermedium, welches eine digitalisierte Landkarte enthält, mit den Schritten:
- Eingabe einer Route mit auf der Landkarte auswählbaren Zielkoordinaten,
- Empfangen von Staudaten über eine externe Quelle,
- Darstellen einer berechneten Route und der jeweiligen Staudaten,
- Graphisch abgesetzte Darstellung einer Teilroute mit Stau,
**gekennzeichnet durch**
- Ausgabe von empfangenen Staudaten auf einer Ausgabeeinheit in editierbarer Form,
- Empfangen von Editierbefehlen zu den ausgegebenen Staudaten von einer Eingabeeinrichtung,
- Berechnen einer neuen Route oder Teilroute unter Beachtung der editierten Staudaten nach Empfang eines Berechnungsbefehls über die Eingabeeinrichtung.

2. Verfahren nach Anspruch 1, **dadurch**
**gekennzeichnet, dass** ein Bereich definierbar ist, der zur Berechnung einer neuen Teilroute nicht verwendet wird.

3. Verfahren nach Anspruch 2, **dadurch**
**gekennzeichnet, dass** der Bereich graphisch durch eine geometrische Form definiert wird.

4. Verfahren nach einem der vorhergehenden Ansprüche,
**dadurch gekennzeichnet, dass** eine Teilroute als Staubereich manuell eingebbar ist.

5. Verfahren nach einem der vorhergehenden Ansprüche,
**dadurch gekennzeichnet, dass** beim Editieren der Staudaten die jeweiligen Daten eines Staus sequentiell beginnend mit dem dem Startpunkt nächstliegenden Stau auswählbar sind.

6. Verfahren nach Anspruch 4, **dadurch**
**gekennzeichnet, dass** zur manuellen Eingabe ein Stau-Startpunkt und ein Stau-Endpunkt eingebbar ist.

7. Navigationsgerät mit einer zentralen Recheneinheit (100), einem Speichermedium (130), welches eine digitalisierte Landkarte enthält, Mitteln zum Empfangen von Staudaten über eine externe Quelle und einer Anzeigeeinheit (110) zum Darstellen einer berechneten Route und der jeweiligen Staudaten, **gekennzeichnet durch**
- Mittel zur Ausgabe von empfangenen Staudaten auf der Anzeigeeinheit (110) in editierbarer Form,
- Mittel zum Editieren der Staudaten, wobei die Mittel eine Eingabevorrichtung (120) beinhalten,
- Mittel zur Berechnung einer neuen Route oder Teilroute unter Beachtung der editierten Staudaten.

8. Navigationsgerät nach dem vorhergehenden Anspruch,
**dadurch gekennzeichnet, dass** die Eingabevorrichtung (120) ein Dreh-Druckgeber oder ein Joystick ist.

9. Navigationsgerät nach Anspruch 7, **dadurch**
**gekennzeichnet, dass** die Eingabevorrichtung eine Gesten-Interpretationsvorrichtung umfasst.

10. Navigationsgerät nach Anspruch 7, **dadurch**
**gekennzeichnet, dass** die Eingabevorrichtung eine Spracherkennung umfasst.

## Claims

1. Method for operating a navigation appliance having a central processor unit and a storage medium which contains a digitized map, having the following steps:
- a route is entered using destination coordinates which can be selected on the map,
- tailback data are received via an external source,
- a calculated route and the respective tailback data are displayed,
- a route section with a tailback is displayed graphically,
**characterized by**
- output of received tailback data on an output unit in editable form,
- reception of editing commands for the output tailback data from an input device,
- calculation of a new route or route section taking into account the edited tailback data following reception of a calculation command via the input device.

2. Method according to Claim 1, **characterized in that** an area can be defined which is not used for calculating a new route section.

3. Method according to Claim 2, **characterized in that** the area is defined graphically by a geometric shape.

4. Method according to one of the preceding claims, **characterized in that** a route section can be entered manually as a tailback area.

5. Method according to one of the preceding claims, **characterized in that**, when the tailback data are being edited, the respective data for a tailback can be selected sequentially starting with the tailback nearest the starting point.

6. Method according to Claim 4, **characterized in that** a tailback starting point and a tailback ending point can be entered for the manual entry.

7. Navigation appliance having a central processor unit (100), a storage medium (130) which contains a digitized map, means for receiving tailback data via an external source, and a display unit (110) for displaying a calculated route and the respective tailback data, **characterized by**
- means for outputting received tailback data on the display unit (110) in editable form,
- means for editing the tailback data, with the means including an input apparatus (120),
- means for calculating a new route or route section taking into account the edited tailback data.

8. Navigation appliance according to the preceding claim, **characterized in that** the input apparatus (120) is a rotation/pressure sensor or a joystick.

9. Navigation appliance according to Claim 7, **characterized in that** the input apparatus comprises a gesture interpretation apparatus.

10. Navigation appliance according to Claim 7, **characterized in that** the input apparatus comprises a voice recognition unit.

## Revendications

1. Procédé destiné à exploiter un appareil de navigation ayant une unité centrale de calcul et un support de mémorisation, qui renferme une carte topographique numérisée, comportant les étapes:
- saisie d'un trajet avec des coordonnées de destination pouvant être choisies sur la carte topographique,
- réception de données concernant des embouteillages provenant d'une source externe,
- représentation d'un itinéraire calculé et des données respectives concernant les embouteillages,
- représentation graphique d'une section d'itinéraire avec embouteillage,
**caractérisé par**
- la sortie, sous une forme éditable, de données reçues relatives aux embouteillages sur une unité de sortie,
- la réception d'instructions d'édition concernant les données éditées relatives aux embouteillages et provenant d'un dispositif de saisie,
- le calcul d'un n ouvel itinéraire o u d'un nouvel itinéraire partiel en tenant compte des données éditées relatives aux embouteillages après la réception d'une instruction d'édition par l'intermédiaire du dispositif de saisie.

2. Procédé selon la revendication 1
**caractérisé par** l e fait
qu'il est possible de définir une zone à ne pas utiliser pour le calcul d'un nouvel itinéraire.

3. Procédé selon la revendication 2
**caractérisé par le fait**
**que** la zone est définie graphiquement par une forme géométrique.

4. Procédé selon l'une des revendications précédentes
**caractérisé par le fait**
**qu'**il est possible de saisir manuellement un itinéraire partiel en tant que zone d'embouteillage.

5. Procédé selon l'une des revendications précédentes
**caractérisé par** l e fait
qu'il est possible, lors de l'édition des données relatives aux embouteillages, de sélectionner séquentiellement les d onnées correspondantes d'un embouteillage, en commençant par l'embouteillage qui est le plus proche du point de départ.

6. Procédé selon la revendication 4
**caractérisé par le fait**
**que**, pour la saisie manuelle, il est possible de saisir un point de début d'embouteillage et un point de fin d'embouteillage.

7. Appareil de navigation ayant une unité centrale de calcul (100), un support de mémorisation (130), qui renferme une carte topographique numérisée, des moyens destinés à la réception de données relatives aux embouteillages provenant d'une source externe et une unité d'affichage (110) destinée à représenter un itinéraire calculé et les données respectives relatives aux embouteillages
**caractérisé par**
- des moyens destinés à la sortie, sur l'unité d'affichage (110), sous une forme éditable, de données reçues relatives aux embouteillages,
- des moyens destinés à l'édition des données relatives aux embouteillages, les moyens comprenant un dispositif de saisie (120),
- des moyens destinés au calcul d'un nouvel itinéraire ou d'un nouvel itinéraire partiel en tenant compte des données éditées relatives aux embouteillages.

8. Appareil de navigation selon la revendication précédente
**caractérisé par le fait**
**que** le dispositif de saisie (120) est un codeur rotatif à pression ou un joystick (ou manche à balai).

9. Appareil de navigation selon la revendication 7
**caractérisé par le fait**
**que** le dispositif de saisie comprend un dispositif d'interprétation de gestes.

10. Appareil de navigation selon la revendication 7
**caractérisé par le fait**
**que** le dispositif de saisie comprend un dispositif de reconnaissance vocale.
